# EUROPEAN PATENT APPLICATION

(11) **EP 0 619 546 A1**
(43) Date of publication of application: **12.10.1994**
(21) Application number: 94104172.5
(22) Date of filing: 17.03.1994
(51) Int. Cl.: G06F 12/06, G06F 13/42

(54) **Programmable memory controller and method for configuring same**

(30) Priority: 05.04.1993 US 43064
(71) Applicant: MOTOROLA, INC., Schaumburg, IL 60196 (US)
(72) Inventor: Gruender, H. Eugene, Austin, Texas 78746 (US); Gregorcyk, Arthur J, Jr., Austin, Texas 78731 (US); Kraft, Douglas R., Austin, Texas 78750 (US); Reed, Wendy, Austin, Texas 78749 (US)
(74) Representative: Hudson, Peter David

(57) **Abstract**

A programmable memory controller (10) and method for configuring the memory controller (10) provide a way to program or configure the memory controller (10) for varying types, speeds, and sizes of memory devices without physically changing the hardware of the memory controller (10). The memory controller can also be programmed or configured to select bus control, timing, and address signals of the memory controller (10) for accessing memory devices.

## Description

### Technical Field

This invention relates generally to memory controllers and methods for configuring said memory controllers and, in particular, to a programmable memory controller and a method which programs or configures a memory controller.

### Background of the Invention

Memory controllers control a variety of functions including how data is written to and read from memory, where memory is located in the address space, and when certain operations occur such as a refresh operation, for example. Memory controllers are conventionally one of two types. The first type of conventional memory controllers comprises those which are designed for a particular memory size, type, and speed and which have unchangeable bus control, timing, and address signals. These conventional memory controllers are not configurable for different sizes, types, or speeds of memory devices but must be used with a particular type of memory device.

The second type of memory controllers comprises those which have limited configurability for varying memory size or address location through setting a number of external on/off switches. However, these conventional memory controllers are not configurable for different types and speeds of memory devices, and they cannot change control and timing signals.

Therefore, there exists a significant need to be able to program through software and configure a memory controller to function with different sizes, types, and speeds of memory devices as well as be able to change or alter control, timing, and address signals of the memory controller.

### Summary of the Invention

The present invention has utility in programming and configuring a memory controller so that it operates with different memory sizes, different types of memory, and different speeds of memory access. Moreover, the memory controller can change any of the control, timing, and address signals which are used when accessing (reading or writing) memory.

Thus, it is an advantage of the present invention to configure the size, speed of access, and type of memory devices controlled by a memory controller without modifying the hardware.

Yet another advantage of the present invention is to alter or change bus control, timing, and address signals generated by a memory controller without physically modifying the memory controller.

It is another advantage of the present invention to program a memory controller through software so that it operates with different memory sizes, different memory types and varying memory speeds.

Another advantage of the present invention is the ability to load configuration data into the memory controller through a two line bus so that the size of the memory controller is maintained.

According to one aspect of the invention, a programmable memory controller is provided. The memory controller is connected to a memory device and is connectable to receive configuration data. The configuration data comprises a plurality of control bits. The control bits are grouped into a plurality of groups which comprises a size, type, and speed of said memory device, and bus control, timing, and address signals of the programmable memory controller. The programmable memory controller comprises a control register for storing the configuration data and for providing the control bits when one of the control bits is toggled, and configuration means connected to the control register for decoding the control bits to configure the memory controller.

According to another aspect of the invention, a method for configuring a memory controller is provided. The memory controller is connected to a plurality of memory devices. The memory controller includes a control register which stores configuration data. The configuration data comprises a size, type, and speed of memory, and bus control, timing, and address signals of said memory controller. The method comprises the steps of (a) loading the configuration data into the control register of the memory controller; (b) decoding the configuration data; and (c) configuring the memory controller based on the configuration data.

### Brief Description of the Drawings

The invention is pointed out with particularity in the appended claims. However, other features of the invention will become more apparent and the invention will be best understood by referring to the following detailed description in conjunction with the accompanying drawings in which:
FIG. 1 shows a programmable memory controller in accordance with a preferred embodiment of the invention;
FIG. 2 shows a control register of a programmable memory controller in accordance with a preferred embodiment of the invention.

### Description of the Preferred Embodiments

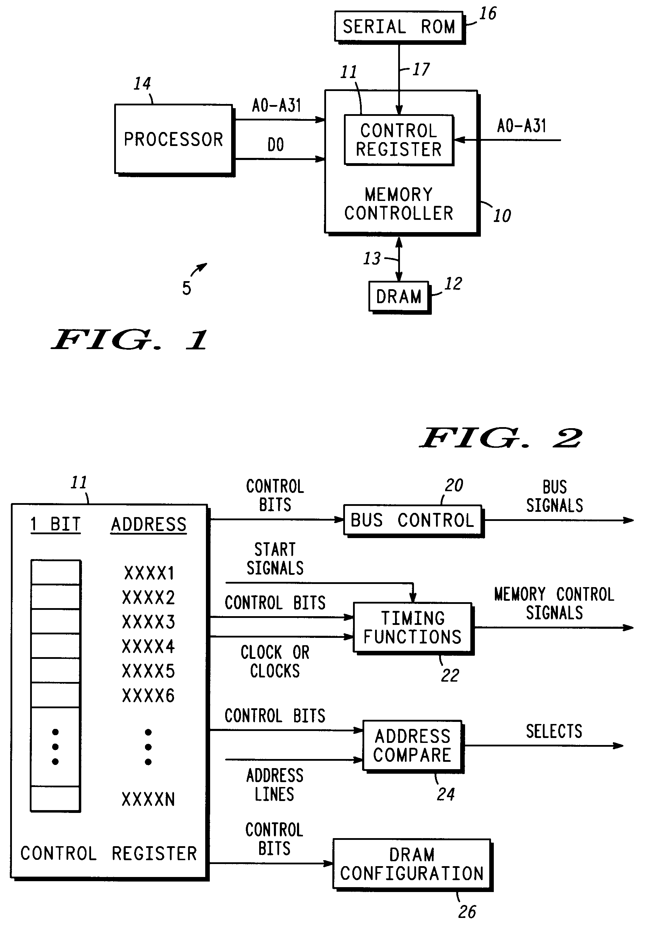

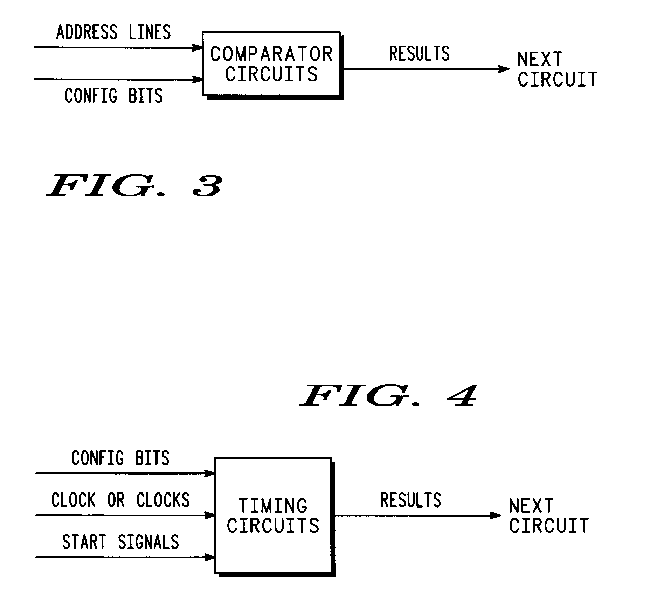

FIG. 1 shows a memory controller system 5 in accordance with a preferred embodiment of the invention. Memory controller system 5 comprises a memory controller 10 which includes a control register 11, dynamic random access memory (DRAM) array 12, processor 14, and serial ROM 16. Memory controller 10 is connected to DRAM 12 by address, data, and control lines shown generally by line 13. Memory controller 10 is also connected to serial ROM 16 through a two-line I2C (inter-integrated circuit communication) bus 17 and to processor 14 through address lines A0-A31 and data line D0.

DRAM array 12 comprises any of various industry-standard and commercially available DRAM devices. For example, Toshiba manufactures a DRAM, part number TCS14402, which can be used in this invention. The purpose of DRAM array 12 is to store data. Processor 14 is a MC88110 RISC (reduced instruction set computer) which is commercially available from Motorola, Inc. Serial ROM 16 is an I2C bus ROM which is commercially available from SGS Thompson, part number ST24C04. The purpose of serial ROM 16 is to store and provide custom configuration data for memory controller 16 through I2C bus 17. Although TCS14402 DRAM 12, MC88110 RISC processor 14, and ST24C04 serial ROM 16 are preferred, other commercially available DRAMs or memories, processors, and serial ROMs could be used as well.

The main purpose of memory controller 10 is to program and configure itself so that it operates correctly and most efficiently with different types, sizes, and speeds of DRAM or different memory configurations. Therefore, there are two parts to configuring memory controller 10. The first part is loading the configuration data or information into memory controller 10. The second part is decoding the configuration data to determine how to configure memory controller 10.

As shown in FIG. 1, memory controller 10 loads or receives configuration data or information from serial ROM 16 over I2C bus 17 and stores it in control register 11. Serial ROM 16 stores a particular memory configuration of DRAM array 12, including the type, size and speed of DRAM array 12 and what bus control, timing, and address signals will be used or set. Serial ROM 16 can be initially programmed with different configurations so that it can provide the proper configuration data when needed, such as upon initialization (start-up) or reset, for example.

Instead of using a serial ROM 16 to store configuration data or information which is written to control register 11, memory controller 10 may also receive configuration data from devices other than serial ROM 16, such as an EPROM, RAM, or a keyboard. In addition, software including operating system software can be used to write configuration data from processor 14 to control register 11. This provides one of the most flexible ways to program memory controller 10. One of ordinary skill in the art would know how to connect processor 14 to I2C bus 17 to write configuration data to control register 11 using appropriate software. Moreover, it is not imperative that an I2C bus 17 be used. Other types of buses could be used, including a one bit or one-line bus, except memory controller 10 may increase in size because more pins and hence space would be needed.

FIG. 2 shows control register 11 of programmable memory controller 10 in accordance with a preferred embodiment of the invention. Control register 11 is where configuration data or information is stored or loaded before it is decoded. As shown in FIG. 2, control register 11 has a one bit data field for each byte address. The size of control register 11 is dependent on how many different functions memory controller 10 will control. Each control bit of control register 11 controls a certain operation of memory controller 10. For example, the first five control bits of control register 11 may configure the bus control signals, the next seven control bits may control the timing function, the next three control bits may determine where the addresses of DRAM array 12 occur, while the last ten control bits may determine the type, speed, and size of DRAM array 12 which is being used.

Control register 12 operates like any other register on I2C bus 17. Memory controller 10 receives all address lines and reserves a block of address space in control register 11 for storing the configuration data. Each of the addresses in control register 11 is able to store one bit of configuration data. A read or write to a byte address in the reserved control register address space stores or retrieves a zero or one at the proper bit location. Memory controller 10 stores bits beginning at the first address and continuing until the last address.

Control bits are decoded to enable specific bus control signals for a particular DRAM configuration, such as bus enable, bus error, and bus acknowledge. For example, control bits from the configuration data stored in control register 11 may determine how long from the start of a cycle that an acknowledge is sent on the bus, or whether memory controller 10 should send an acknowledge or bus error if there is a memory bit error.

Control bits stored in control register 11 also configure memory timing signals, including but not necessarily limited to the length of RAS (read address strobe) and CAS (column address strobe), the amount of time that the output enable of DRAM array 12 stays on, when a write pulse is sent to memory or DRAM array 12, when a refresh operation is performed, and when and how often an error detection and correction (scrubbing) operation is performed.

Address compare signals comprise signals generated from comparing configuration bits with the address bits to determine whether a memory cycle should access DRAM array 12 through memory controller 10.

DRAM or memory configuration signals are signals which configure memory controller 10 for the following: (i) the size of the DRAMs installed in DRAM array 12 such as 1 megabits by 4 bits wide, 4 megabits by 4 bits wide, or 16 megabits by 4 bits wide, for example; (ii) the population of DRAMs, for example one bank of 72 chips versus 2 independent banks of 72 bits; and (iii) the type of DRAM used, such as static column or page mode, for example.

Once all the configuration data is loaded into control register 11, the last control bit is specially used to transfer the loaded control bits from control register 11 into their respective flip-flops in bus control circuitry 20, timing function circuitry 22, address compare circuitry 24, and DRAM configuration circuitry 26. By toggling the last control bit after all the other control bits have been loaded, memory controller 10 cannot configure itself before all the configuration data is received by control register 11. In other words, the configuration of memory controller 10 occurs when the bit at the last address of the controller register 11 is toggled. This prevents piece-meal configuration of memory controller 10.

Once the control bits loaded in control register 10 are sent to their respective flip-flops, these control bits are decoded to provide how memory controller 10 is to be configured. The circuitry used for decoding the control bits and for providing the appropriate bus control signals, timing signals, address compare signals, and DRAM configuration signals can be constructed by one of ordinary skill in the art. The complexity of the configuration depends on how many different types, speeds, and sizes of DRAMs a designer wants to include and what bus control, timing, and address signals are able to be changed. For example, a designer may want to configure memory controller 10 so that it works with four different types and sizes of DRAM where each of the types of DRAM has two different speeds. Another designer may want to be able to configure a memory controller 10 so that it operates with two different types of DRAMs, where each type of DRAM is a different size and has four different speeds of access.

Decoding the control bits may occur in one of several ways. For example, decoding the control bits may involve applying the control bits to one side of an exclusive-or gate while applying other signals to the other side of the gate. The results of the comparison by the exclusive-or could be used for determining whether to use a particular signal. Another way to decode the control bits would involve selecting one of the output stages in a delay circuit. A third way may involve feeding a signal and an inversion of the signal to a multiplexer and then using a control bit to select which side of the multiplexer to use. Another way may involve comparing the control bits to the outputs of counters to decide when an event should occur, such as when to perform a refresh operation or scrub (error detection and correction) operation, for example.

It will be appreciated by those skilled in the art that the present invention programs or configures a memory controller for varying sizes, types, and speeds of memory, as well as for varying bus control, timing, and address signals. Moreover, configuration data can be loaded in an efficient manner across a two-line bus so that the size of the memory controller is not greatly expanded due to the need for adding more pins.

It is intended by the appended claims to cover all modifications of the invention which fall within the true spirit and scope of the invention.

## Claims

1. A programmable memory controller (10) connected to a plurality of memory devices and connectable to receive configuration data, said configuration data comprising a plurality of control bits, said control bits being grouped into a plurality of groups comprising a size, type, and speed of said memory devices, and bus control, timing, and address signals of said programmable memory controller, said programmable memory controller comprising:
a control register (11) for storing said configuration data and for providing said control bits when one of said control bits is toggled; and
configuration means connected to said control register (11) for decoding said control bits to configure said memory controller (10).

2. A programmable memory controller (10) as recited in claim 1, wherein said configuration means includes means for configuring at least one of said size, type, and speed of said memory devices, and said bus control, timing, and address signals of said programmable memory controller.

3. A programmable memory controller (10) as recited in claim 1, further comprising means for receiving said configuration data over a two-line bus.

4. A programmable memory controller (10) as recited in claim 1, wherein said configuration means includes:
bus control means (20) responsive to a first predetermined group of said control bits for determining said bus control signals;
timing function (22) responsive to a second predetermined group of said control bits means for determining said timing signals;
address compare means (24) responsive to a third predetermined group of said control bits for determining said address signals; and
memory configuration means (26) responsive to a fourth predetermined group of said control bits for determining said size, type, and speed of said memory.

5. A method for configuring a memory controller (10), said memory controller (10) connected to a plurality of memory devices, said memory controller (10) including a control register (11), said control register (11) storing configuration data, said configuration data being used for determining size, type, and speed of said memory devices, and bus control, timing, and address signals of said memory controller (10), said method comprising the steps of:
(a) loading said configuration data into said control register (11) of said memory controller;
(b) decoding said configuration data; and
(c) configuring said memory controller (10) based on said configuration data.

6. A method as recited in claim 5, wherein step (c) comprises the step of configuring said memory controller (10) for said size, type, and speed of said memory devices and said bus control, timing, and address signals of said memory controller (10).

7. A method as recited in claim 5, wherein said configuration data comprises a plurality of bits, and wherein step (d) comprises the step of toggling a last bit of said bits for loading said configuration data into a plurality of flip-flops.

8. A memory system comprising:
a plurality of memory devices (12);
means for providing configuration data which includes a plurality of control bits, said control bits being grouped into a plurality of groups; and
a programmable memory controller (10) connected to said memory devices, said programmable memory controller (10) including:
a control register (11) for receiving and storing said
configuration data and for providing said control bits
when one of said control bits is toggled; and
configuration means connected to said control register (11) for receiving and decoding said control bits to configure said memory controller (10) for a particular size, type, and speed of said memory and bus control, timing, and address signals.

9. A memory system as recited in claim 9, wherein said memory controller (10) further comprises means for receiving said configuration data through a two line bus.

10. A memory system as recited in claim 9, wherein said configuration means includes:
bus control means (20) responsive to a first predetermined group of said control bits for determining said bus control signals;
timing function means (22) responsive to a second predetermined group of said control bits for determining said timing signals;
address compare means (24) responsive to a third predetermined group of said control bits for determining said address signals; and
memory configuration means (26) responsive to a fourth predetermined group of said control bits for determining said size, type, and speed of said memory.
